Europäisches Patentamt

(19) European Patent Office

Office européen des brevets

(11) Publication number: **0 063 580**
**B1**

(12) EUROPEAN PATENT SPECIFICATION

(45) Date of publication of patent specification: **21.01.87**  (51) Int. Cl.⁴: **F 16 L 9/10, B 01 D 15/08**

(21) Application number: **81902932.3**

(22) Date of filing: **22.10.81**

(86) International application number:
**PCT/US81/01424**

(87) International publication number:
**WO 82/01578 13.05.82 Gazette 82/12**

(54) METALLIC CLAD CAPILLARY TUBING.

(30) Priority: **03.11.80 US 203782**

(43) Date of publication of application:
**03.11.82 Bulletin 82/44**

(45) Publication of the grant of the patent:
**21.01.87 Bulletin 87/04**

(84) Designated Contracting States:
**DE FR GB NL**

(56) References cited:
**US-A-2 006 226**
**US-A-2 292 026**
**US-A-4 072 243**
**US-A-4 293 415**

(73) Proprietor: **Hughes Aircraft Company**
**7200 Hughes Terrace P.O. Box 45066**
**Los Angeles California 90045-0066 (US)**

(72) Inventor: **WYSOCKI, Joseph A.**
**5200 Longfellow Way**
**Oxnard, CA 93033 (US)**

(74) Representative: **Milhench, Howard Leslie et al**
**A.A. Thornton & Co. Northumberland House**
**303/306 High Holborn**
**London, WC1V 7LE (GB)**

## Description

This invention relates to silica capillary columns for gas chromatography, and, in particular, to metallic clad silica capillaries and to processes of formation thereof.

Description of the Prior Art

In the field of analytical chemistry, gas chromatography (GC) is the most widely used and the most rapidly growing analytical technique. Although the field of gas chromatography is more properly subdivided into specific categories, the gas-liquid chromatography or gas-liquid partition chromatography, as it is also called, is mainly responsible for the tremendous development of the field as a whole. Usefulness of this technique is closely tied to the proper selection of a column, or partition column, in which the separation of sample components takes place.

The most useful of these columns is the Golay or open tubular column. Typically, these columns are capillary tubing with a bore between 0.2 and 0.5 mm (0.008 to 0.02 in.). In some cases, the bore may range between 0.1 mm (for fast analysis) to 2 mm (for semi-preparative work). The length of these capillaries tubes is on the order of 15 to 100 m (about 50 to 300 feet).

Preparation of these capillary columns requires consideration of uniform inner diameter, good temperature resistance, good mechanical strength and non-reactivity with respect to the sample and the stationary phase (inner coating). Typically, stainless steel, copper and glass are all common capillary materials. However, because of inertness requirements, copper is the least used material. High purity glasses, commonly found in optical fiber work, are an excellent condidate for cheap, disposable column manufacture.

These same columns, e.g. about 0.25 mm ID $\times$ 100 m, of high purity silica may also be used in conjunction with mass spectrometers (MS) to analyze small amounts of complicated mixtures that can be fractionated satisfactorily only with this technique.

However, in either the GC or GC—MS systems, the problem of placing a long length, e.g., about 50 to 300 ft, of tubing in a constant elevated temperature environment places two constraints on the tube. The first constraint relates to stress. In order to place a long length of a tube having an ID of 0.25 to 0.5 mm in a small space, the tube might be coiled in a 2.5 cm diameter space. This would place the tube OD (typically 0.3 to 1.0 mm) under an effective tensile stress of between 8274 $\times$ $10^5$ to 27579 $\times$ $10^5$ N/m² (120,000 to 400,000 psi). The ID of the tube is at a stress between 6895 $\times$ $10^5$ to 13790 $\times$ $10^5$ N/m² (100,000 to 200,000 psi). To keep the fiber from failing due to mechanical abrasion, it is necessary to protect the outside of this tube. (Mechanical abrasion of the inside of the tube is, of course, neglected.) While organic coatings may provide this service, they would burn or melt off at the elevated temperatures often required in GC work (e.g., 300°C). In addition, organic coatings do not protect the fiber from the second constraint, which is generally referred to as subcritical crack growth, or static fatigue. Here, a surface flaw placed under stress (by bending, for example) will start to grow in an atmosphere containing water or other monovalent ion. This growth is time dependent and will continue to failure.

U.S.—A—4293415 discloses a flexible glass capillary for gas chromatography, having an outer layer of polymide or silicone rubber to protect from abrasion and a layer of silicon nitride to protect from moisture. Alternatively a layer of metal can be used which is chemically inert and has a thickness of 25 µm. However, there is no discussion in this patent of the factors which will make a metal suitable for this particular application. In particular there is no discussion of the problems of static fatigue or subcritical crack growth.

U.S. Patent 4072243 discloses metallic coatings on glassware and is not concerned with glass capillaries where there are the problems of maintaining flexibility while avoiding mechanical abrasion, static fatigue and ingress of moisture. In addition this patent discloses the use of a graphite interface to prevent mechanical bonding of the metal to the surface. This points away from the direct bonding of metal to glass as is required in the present invention.

It is an object of the present invention to provide a flexible glass capillary for gas chromatography having a metallic layer thereon and a process of formation thereof, wherein the problems of moisture ingress and static fatigue are avoided.

The present invention provides a glass capillary of the type specified in the pre-characterising part of claim 1, as is disclosed in U.S.—A—4293415, wherein in order to preserve the nascent strength of the glass capillary without substantially interfering with the flexibility thereof, at lest one coating of metal or alloy is provided wherein.

a) in order to provide freedom from static fatigue, the tensile strength of the metallic clad capillary is not substantially less than that of the unclad capillary and the coating is substantially chemically inert with respect to the material comprising said glass capillary at the deposition temperature during coating of the metal or alloy on the capillary.

b) the coating forms an hermetic seal on the outer surface of the capillary and has a thickness less than 200 µm, and

c) the metal or a major portion of the alloy is selected from the following elements; vanadium, chromium, iron, cobalt, copper, zirconium, niobium, palladium, zinc and cadmium.

In a further aspect the invention provides a process for substantially preserving the nascent strength of a glass capillary of the type specified in the pre-characterising part of claim 2, as is disclosed in US Application 4293415, wherein:

a) the metallic layer is applied to the capillary immediately after the glass drawing operation for forming the glass capillary while the capillary is at an elevated temperature;

b) the metallic layer is applied in a thickness of less than 200 μm to form an hermetic seal on the outer surface of the capillary; and

c) the metallic layer is chosen from a metal or alloy which provides a coating substantially chemically inert with respect to the material comprising said glass capillary at the deposition temperature during coating of the metal or alloy and the tensile strength of the metallic clad capillary is not substantially less than that of the unclad capillary.

Use of the metallic coating provides a hermetic seal around the outside of the capillary while providing mechanical protection at elevated temperatures. This coating protects the capillary circumference from the deleterious effects of moisture. The capillary bore, of course, remains uncoated or is coated with a suitable stationary phase, since it must be free from all but the components to be analyzed. These compounds generally do not contain any of the monovalent free radicals that contribute to static fatigue.

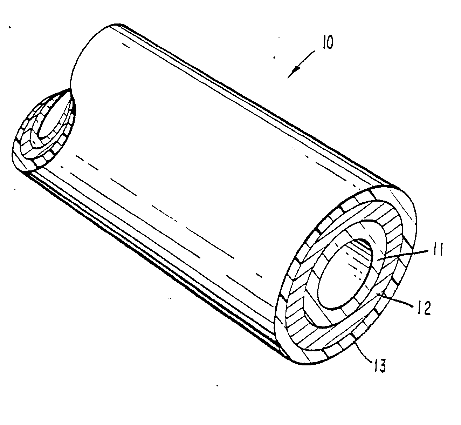

Brief Description of the Drawing

The Figure is a perspective view, partly in section, showing on an enlarged scale the details of a metallic clad silica capillary tube embodying the invention.

Detailed Description of the Invention

There is shown in the Figure (not to scale) a metallic clad capillary tube 10 in accordance with the invention. Metallic clad capillary tube 10 comprises a glass tube or capillary 11 and at least one metallic coating or jacket 12 concentrically surrounding the glass capillary 11. Glass capillary 11 is preferably high-purity $SiO_2$ or doped silica. However, the composition of the glass capillary is not otherwise critical, so long as it remains inert during use in gas chromatography analysis.

The metallic jacket 12 comprises a metal or alloy that is substantially chemically inert with respect to the glass capillary 11. That is, the metal or alloy is one that does not react chemically with the glassy material at the deposition temperature during the time of coating the metal or alloy onto the glass capillary. The metallic coating, as more fully described below, is preferably applied by passing the capillary through a molten pool of the metal or alloy. In view of the velocity with which a capillary passes through a molten pool of the metal or alloy being coated on the capillary about 1 ft/sec (0.3 ms$^{-1}$) to 10 ft/sec (3.05 ms$^{-1}$), usually about 3 ft/sec (0.91 ms$^{-1}$), the melting point of the metal or alloy may be higher than the softening point of $SiO_2$. In particular, the melting point of the metal or alloy to be coated may range as high as about 2,300°C, so long as the capillary itself does not experience a temperature greater than its softening point.

In determining whether a particular metal or alloy is stable under the conditions described above, a comparison of the free energy of formation of the corresponding oxide at the deposition temperature of the metal or alloy with the free energy of formation of silica at the same temperature is necessary. The free energy of formation of an oxide of the metal or alloy must be less negative than the free energy of formation of silica at the deposition temperature of the metal or alloy; otherwise, such metal or alloy would have a higher affinity for oxygen than silicon, and thus would react with $SiO_2$.

Metal elements suitable in the practice of the invention include vanadium, chromium, manganese, iron, cobalt, copper, arsenic, strontium, zirconium, niobium, rhodium, palladium, tellurium, barium, iridium, platinum, thallium, zinc and cadmium. Alloys suitable in the practice of the invention include alloys containing these elements in combination with each other or combination with other elements, whether metallic or non-metallic, so long as the alloys remain ductile at ordinary temperatures of use. Examples of such other alloying metal elements include magnesium, while example of such other alloying non-metal elements include antimony, bismuth, boron, carbon, phosphorous and silicon. Such alloys of metal elements with additional elements comprise a major portion (i.e., greater than 50% by weight) of the metal elements and a minor portion (less than 50%) of additional elements. Due to factors related to toxicity, expense, ease of handling and other factors, elements such as manganese, arsenic, strontium, rhodium, tellurium, barium, iridium, platinum and thallium, which are otherwise suitable, are not likely to find use except as alloying elements and hence are not preferred as elemental metal coatings.

Additional metallic coatings (not shown) may be applied to the metallic coating 12 above and may comprise any metal or alloy; such metal or alloy is not subject to the same constraints as the first metallic cladding. Thus, the additional cladding may be of the same composition as the first in order to cure localized defects or to build up the thickness. Alternatively, the second cladding may be of a different metal or alloy which otherwise might or might not react with the underlying glass capillary. Accordingly, a hybrid structure may be fabricated having mechanical properties that are different than either metallic cladding alone. For example, the first metallic cladding may comprise tin which does not react with silica and the second metallic cladding may comprise aluminum. Another combination is a steel (high yield point) on tin (low yield point). Additional combinations include tin on copper, tungsten on tin, copper on tin, copper on zinc, and aluminum on copper.

Since the free energy of formation values are not always available, especially for alloys, it is sufficient evidence that the tensile strength of the metallic clad capillary be substantially not less than that of the unclad capillary in determining the suitability of a particular metal or alloy. The strength comparison should be made at the same strain rates; these rates should be fast enough to limit static fatigue in the range of interest. Further, the unclad capillary used for comparison should be tested before it contacts any other solid. Failures in the holding fixture for the strain test are ignored in the comparison; such failures are not considered part of the original sample population, since the failure is clearly associated with the testing fixture.

The metallic claddings may be applied by a variety of methods, including the passage of the fiber through a molten pool, as described below, vapor plating, vacuum deposition, sputtering, electro-deposition and the like. In any event, the coating is applied to the glass capillary during the drawing operation immediately after the capillary emerges from the furnace. Apparatus well-known for coating glass fibers with metals may be suitably employed. Importantly, the coating is applied before the capillary has a chance to be abraded by the take-up drum onto which the coated capillary is spooled, and even before the capillary cools to the point where ambient moisture can react with its surface.

Preferably, at least one of the metallic layers, and most preferably the first metallic layer, is applied by passing the glass capillary through a coating cup which contains the molten metal or alloy to be coated onto the capillary at a temperature slightly above the melting point of the metal or alloy. The cup has a small hole in its bottom large enough to pass the glass capillary but sufficiently small so that surface tension of the molten metal or alloy prevents it from running out. As the glass capillary passes through the cup, a thin layer of metal or alloy freezes onto the surfaces of the glass capillary. This method rapidly forms thick metallic coatings having characteristics similar to those of the bulk metal or alloy.

Proper conditions for the formation of a strong, adherent metallic layer on the glass fiber surface require that the temperature of the metal-containing bath through which the glass capillary is passed be slightly greater than the melting point of the metal or alloy, while the temperature of the glass capillary be somewhat below this melting point. Further in the case of alloys, the alloys must evidence solubility in the liquid state in order to avoid segregation of phases in these alloys during cooling.

The metallic cladding provides a tight, permanant and durable hermetic seal about the glass fiber. Determination of the adequacy of hermetic sealing is made by preparing a plot of log (stress) versus log (time) or a plot of log (strain rate) versus log (means failure stress). As is well-known, a slope of substantially zero implies a hermetic seal.

The thickness of the metallic layer is controlled by adjusting the capillary drawing rate and the metal deposition parameters such as, for example, in the case of molten metal coating, the temperature differential between the capillary and the metal-containing bath. Typically, the total thickness of the metallic cladding 12 (including subsequent metallic claddings) lies in the range of about 10 to 200 µm and preferably lies in the range of about 20 to 50 µm. The maximum thickness is restricted by a requirement to not impair the flexibility of the capillary, whereas the minimum thickness is set by a requirement to achieve adequate strength and hermetic sealing.

The resulting glass capillary 10 evidences a retention of mechanical strength of the nascent glass capillary to a greater extent than evidenced by glass capillaries clad with other materials. Further, the metallic clad capillary of the invention will not fail due to static fatigue if it is used at less than about 3/4 of its original tensile strength, regardless of the absolute value of that tensile strength. The high pristine ultimate strength of the glass capillary material is approximately $2 \times 10^6$ psi and is therefore more than adequate to achieve a final desired level in excess of $3447 \times 10^5$ N/m² (50,000 psi).

The metallic layer or jacket 12 provides good mechanical protection and a hermetic seal against contamination. Additional mechanical protection, galvanic protection and electrical insulation can be achieved as needed by applying a plastic overcoat 13 outside of the metallic jacket 12. For example, as little as 10 to 25 µm of a polyvinyl formate coating is useful in preserving the integrity of the metallic cladding in an electrolytic cell with stainless steel electrodes and salt water. Other plastic coatings may also be used.

The metallic clad glass capillaries are capable of operating continuously for at least a year up to about 2/3 $T_m$ (°K). where $T_m$ is the melting point of the metal or alloy, with no more than about 100% damage (i.e., no more than about 50% loss of strength).

**Claims**

1. A flexible glass capillary for gas chromatography having a chemically inert metallic layer (12) thereon having a thickness of more than 10 µm, for protection from abrasion, characterized in that, in order to preserve the nascent strength of the glass capillary without substantially interfering with the flexibility thereof, the layer comprises at least one coating (12) of metal or alloy wherein

a) in order to provide freedom from static fatigue, the tensile strength of the metallic clad capillary is not substantially less than that of the unclad capillary and the coating is substantially chemically inert with respect to the material comprising said glass capillary at the deposition temperature during coating of the metal or alloy on the capillary.

b) the coating forms an hermetic seal on the outer surface of the capillary and has a thickness less than 200 µm, and

c) the metal or a major portion of the alloy is selected from the following elements; vanadium, chromium, iron, cobalt, copper, zirconium, niobium, palladium, zinc and cadmium.

2. A process for substantially preserving the nascent strength of a glass capillary employed in gas chromatography including forming a chemically inert metallic layer (12) thereon having a thickness of more than 10 µm, characterized in that:

a) the metallic layer is applied to the capillary immediately after a glass drawing operation for forming the glass capillary while the capillary is at an elevated temperature;

b) the metallic layer is applied in a thickness of less than 200 µm to form an hermetic seal on the outer surface of the capillary; and

c) the metallic layer is chosen from a metal or alloy which provides a coating substantially chemically inert with respect to the material comprising said glass capillary at the deposition temperature during coating of the metal or alloy and the tensile strength of the metallic clad capillary is not substantially less than that of the unclad capillary.

3. The process of claim 2 in which said metal or a major portion of the alloy comprises an element selected from the group consisting of vanadium, chromium, iron, cobalt, copper, zirconium, niobium, palladium, zinc and cadmium.

4. The capillary of claim 1 or process of claim 3 in which said metal or a major portion of the alloy comprises an element selected from the group consisting of iron, cobalt, copper and zinc.

5. The capillary of claim 1 or process of claim 3 in which said alloy includes at least one additional element selected from the group consisting of manganese, arsenic, strontium, rhodium, tellurium, barium, iridium, platinum, thallium antimony, bismuth, boron, carbon, phosphorous and silicon.

6. The capillary or process of claim 5 in which said additional element is at least one selected from the group consisting of manganese, arsenic, antimony, bismuth, boron, carbon, phosphorous and silicon.

7. The capillary of claim 1 or the process of claim 2 in which said thickness is less than 50 µm.

## Patentansprüche

1. Flexible Glaskapillare mit einer mehr als 10 µm dicken chemisch inerten Metallbeschichtung (12) zum Schutz vor Verschleiß, dadurch gekennzeichnet, daß die Beschichtung wenigstens eine Schicht (12) aus Metall oder Legierung umfaßt, um die entstehende Festigkeit der Glaskapillare ohne wesentliche Änderung der Flexibilität zur erhalten, wobei

a) die Zugfestigkeit der metallbeschichteten Kapillare nicht wesentlich kleiner als die der unbeschichteten Kapillare ist, um statische Ermüdung zur verhindern, und die Beschichtung bei der Ablagerungstemperatur während des Beschichtens der Kapillare mit Metall oder Legierung bezüglich des Materials, aus dem die Kapillare besteht, im wesentlich chemisch inert ist,

b) die Beschichtung eine hermetische Abdichtung der Außenfläche der Kapillare bildet und eine Dicke von weniger als 200 µm aufweist, und

c) das Metall oder ein Hauptteil der Liegierung aus den folgenden Elementen ausgewählt ist:

Vanadium, Chrom, Eisen, Kobalt, Kupfer, Zirkonium, Niob, Palladium, Zink und Kadmium.

2. Verfahren zum Erhalten der entstehenden Festigkeit einer Glaskapillare, die in der Gaschromatographie verwendet wird, wobe eine chemisch inerte Metallschicht (12) mit einer Dicke von mehr als 10 µm auf der Kapillare gebildet wird, gekennzeichnet durch:

a) Aufbringen der Metallschicht auf die Kapillare unmittelbar nach dem Ziehen des Glases zum Bilden der Glaskapillare, während die Kapillare sich auf einer erhöhten Temperatur befindet,

b) Aufbringen der Metallschicht in einer Dicke von weniger als 200 µm, um eine hermetische Abdichtung auf der Außenfläche der Kapillare zu bilden, und

c) Auswahl der Metallschicht aus einem Metall oder einer Legierung, die bei der Ablagerungstemperatur während der Beschichtung mit dem Metall oder der Legierung bezüglich des Materials, aus dem die Glaskapillare besteht, im wesentlichen chemisch inert ist und die Zugfestigkeit der metallbeschichteten Kapillare nicht wesentlich kleiner als die der unbeschichteten Kapillare ist.

3. Verfahren nach Anspruch 2, wobei das Metall oder ein Hauptteil der Legierung ein Element ausgewählt aus folgender Gruppe aufweist: Vanadium, Chrom, Eisen, Kobalt, Kupfer, Zirkonium, Niob, Palladium, Zink und Kadmium.

4. Kapillare nach Anspruch 1 oder Verfahren nach Anspruch 3, wobei das Metall oder ein Hauptteil der Legierung ein Element ausgewählt aus folgender Gruppe aufweist: Eisen, Kobalt, Kupfer und Zink.

5. Kapillare nach Anspruch 1 oder Verfahren nach Anspruch 3, wobei die Legierung wenigstens ein zusätzliches Element ausgewählt aus folgender Gruppe aufweist: Mangan, Arsen, Strontium, Tellur, Barium, Iridium, Platin, Thallium, Antimon, Wismut, Bor, Kohlenstoff, Phosphor und Silizium.

6. Kapillare oder Verfahren nach Anspruch 5, wobei das zusätzliche Element wenigstens eines aus der Gruppe bestehend aus Mangan, Arsen, Antimon, Wismut, Bor, Kohlenstoff, Phosphor und Silizium ist.

7. Kapillare nach Anspruch 1 oder Verfahren nach Anspruch 2, wobei die Dicke weniger als 50 µm ist.

## Revendications

1. Capillaire de verre flexible pour chromatographie gazeuse possédant à sa surface une couche métallique inerte chimiquement d'une épaisseur supérieure à 10 microns, pour le protéger de l'abrasion, caractérisé en ce que dans le but de conserver la résistance initiale de ce capillaire sans altérer sensiblement la flexibilité, la couche comprend au moins un revêtement (12) de métal ou d'alliage, dans lequel,

a) pour se libérer de la fatigue statique, la résistance à la traction du capillaire à placage métallique n'est pas sensiblement inférieure à celle du

**0 063 580**

capillaire non plaqué, et le revêtement est pratiquement inerte chimiquement vis-à-vis du matériau constituant le capillaire de verre à la température de dépôt lors du revêtement du capillaire par le métal ou l'alliage,

b) le revêtement forme un joint hermétique à la surface extérieure du capillaire et présente un épaisseur inférieure à 200 microns,

c) le métal ou une proportion majeure de l'alliage est choisi parmi les éléments suivants: vanadium, chrome, fer, cobalt, cuivre, zirconium, niobium, palladium, zinc et cadmium.

2. Procédé pour conserver sensiblement la résistance initiale d'un capillaire de verre, utilisé en chromatographie gazeuze, comprenant la formation d'une couche métallique inerte chimiquement (12) à sa surface ayant une épaisseur supérieure à 10 microns, caractérisé en ce que:

a) la couche métallique est appliquée sur le capillaire immédiatement après une opération d'étirage du verre pour former le capillaire de verre alors que ce dernier est à température élevée;

b) la couche métallique est appliquée en une épaisseur de moins de 200 microns pour former un joint hermétique sur la surface extérieure du capillaire, et

c) la couche métallique est choisie dans un métal ou un alliage qui fournit un revêtement sensiblement inerte vis-à-vis du matériau constituant ce capillaire de verre, à la température de dépôt lors de l'opération de revêtement par le métal ou l'alliage, et la résistance à la traction du capillaire à placage métallique n'est pas sensiblement inférieure à celle du capillaire non plaqué.

3. Le procédé de la revendication 2 dans lequel le métal ou une proportion majeure de l'alliage comprend au moins un élément choisi dans le groupe constitué par: le vanadium, le chrome, le fer, le cobalt, le cuivre, le zirconium, le niobium, le palladium, le zinc et le cadmium.

4. Le capillaire de la revendication 1 ou le procédé de la revendication 3, dans lequel ce métal ou une proportion majeure de cet alliage comprend un élément choisi dans le groupe constitué par le fer, le cobalt, le cuivre, et le zinc.

5. Le capillaire de la revendication 1 ou le procédé de la revendication 3, dans lequel cet alliage contient au moins un élément additionnel choisi dans le groupe constitué par le manganèse, l'arsenic, le strontium, le rhodium, le tellure, le baryum, l'iridium, le platine, le thallium, l'antimoine, le bismuth, le bore, le carbone, le phosphore et le silicium.

6. Le capillaire ou le procédé de la revendication 5 dans lequel cet élément additionnel est au moins l'un des éléments choisi dans le groupe constitué par le manganèse, l'arsenic, l'antimoine, le bismuth, le bore, le carbone, le phosphore et le silicium.

7. Le capillaire de la revendication 1 ou le procédé de la revendication 2 dans lequel l'épaisseur est inférieure à 50 microns.